# EUROPÄISCHE PATENTSCHRIFT

(11) **EP 2 080 651 B1**
(45) Veröffentlichungstag und Bekanntmachung des Hinweises auf die Patenterteilung: **05.01.2011**
(21) Anmeldenummer: 09000054.8
(22) Anmeldetag: 05.01.2009
(51) Int. Cl.: B60H 1/22

(54) **Fahrzeugtemperiersystem und Verfahren zum Betreiben eines Fahrzeugtemperiersystems**
Vehicle tempering system and method for operating same
Système d'équilibrage des températures pour véhicule et procédé de fonctionnement d'un système d'équilibrage des températures pour véhicule

(30) Priorität: 16.01.2008 DE 102008004686
(43) Veröffentlichungstag der Anmeldung: 22.07.2009
(73) Patentinhaber: J. Eberspächer GmbH & Co. KG, 73730 Esslingen (DE)
(72) Erfinder: Pfister, Wolfgang, 73732 Esslingen (DE); Schlecht, Patric, 73760 Ostfildern (DE); Köberle, Christoph, 70736 Fellbach (DE); Epple, Jürgen, 72135 Dettenhausen (DE)
(74) Vertreter: Ruttensperger, Bernhard

(56) Entgegenhaltungen:
- EP-A- 0 306 911
- EP-A- 0 691 229
- DE-A1- 19 925 915

## Beschreibung

Die vorliegende Erfindung betrifft ein Fahrzeugtemperiersystem, welches umfasst: ein brennstoffbetriebenes Heizgerät mit einer Brenneranordnung und einer Flüssigkeitswärmetauscheranordnung zur Übertragung von in der Brenneranordnung bereitgestellter Wärme auf eine Temperierflüssigkeit, einen Temperierflüssigkeitskreislauf zwischen dem Heizgerät und einem Antriebsaggregat, umfassend einen von einem Austrittsbereich der Flüssigkeitswärmetauscheranordnung zu dem Antriebsaggregat führenden ersten Leitungsbereich und einen von dem Antriebsaggregat zu einem Eintrittsbereich der Flüssigkeitswärmetauscheranordnung führenden zweiten Leitungsbereich, eine erste Temperaturfühleranordnung zur Erfassung der Temperierflüssigkeitsisttemperatur im Temperierflüssigkeitskreislauf, eine Luftwärmetauscheranordnung in einem der Leitungsbereiche des Temperierflüssigkeitskreislaufs zur Übertragung von in der Temperierflüssigkeit transportierter Wärme auf in einen Fahrzeuginnenraum einzuleitende Luft, sowie ein Gebläse zum Fördern von in der Luftwärmetauscheranordnung zu erwärmender Luft in den Fahrzeuginnenraum.

Die vorliegende Erfindung betrifft ferner ein Verfahren, mit welchem ein derartiges Fahrzeugtemperiersystem betrieben werden kann.

Bei derartigen Fahrzeugtemperiersystemen wird insbesondere dann, wenn das brennstoffbetriebene Heizgerät als Standheizung zu betreiben ist, also bei vergleichsweise niedriger Umgebungstemperatur der Innenraum eines Fahrzeugs vor der Nutzungsaufnahme vorgewärmt werden soll, das brennstoffbetriebene Heizgerät aktiviert, um Wärme bereitzustellen, die in der Flüssigkeitswärmetauscheranordnung auf eine als Wärmeträgermedium wirksame Temperierflüssigkeit übertragen wird. Diese Temperierflüssigkeit zirkuliert durch die Flüssigkeitswärmetauscheranordnung und ggf. auch ein Antriebsaggregat, beispielsweise eine Brennkraftmaschine, und kann somit auch für eine Vorwärmung der Brennkraftmaschine vor der Nutzungsaufnahme eines Fahrzeugs sorgen. Hat die Temperierflüssigkeit eine bestimmte Grenztemperatur erreicht, wird in einem Regelverfahren dafür gesorgt, dass durch entsprechende Einstellung der Heizleistung des brennstoffbetriebenen Heizgerätes eine weitere Erwärmung der Temperierflüssigkeit nicht erfolgt, deren Temperatur also im Bereich einer beispielsweise als Vorgabewert in einer Ansteuervorrichtung abgelegten Temperierflüssigkeitssolltemperatur gehalten wird. In der Luftwärmetauscheranordnung wird von der zirkulierenden und Wärme transportierenden Temperierflüssigkeit Wärme entzogen und auf die in einem Fahrzeuginnenraum einzuleitende Luft übertragen. Die Luft wird durch das Gebläse vorangefördert und strömt dann mit einer durch die Drehzahl eines Förderrads des Gebläses im Wesentlichen bestimmten Strömungsgeschwindigkeit bzw. Strömungsmenge in den Fahrzeuginnenraum ein.

Insbesondere dann, wenn in einer derartigen Betriebsphase, ggf. aber auch bei bereits aktiviertem und auch Wärme erzeugendem Antriebsaggregat, die äußeren Umgebungsbedingungen sich ändern, beispielsweise dadurch, dass durch Sonneneinstrahlung der Fahrzeuginnenraum zusätzlich erwärmt wird, kann ein Zustand auftreten, in welchem die Temperatur im Fahrzeuginnenraum auf einen übermäßig hohen Wert ansteigt.

Die DE 199 25 915 A1 zeigt ein in einen Kühlmittelkreislauf einer Brennkraftmaschine integriertes brennstoffbetriebenes Heizgerät gemäß Oberbegriff des Anspruchs 1 und 10. Das durch dieses erwärmte Kühlwasser strömt durch einen Luftwärmetauscher und die Brennkraftmaschine, um dort Wärme abzugeben bzw. aufzunehmen. Dem Kühlwasser ist ein Temperatursensor zugeordnet, welcher die Kühlwassertemperatur vor dem Eintritt in das brennstoffbetriebene Heizgerät erfasst. Beruhend auf dieser Kühlwassertemperatur wird der Betrieb des brennstoffbetriebenen Heizgeräts eingestellt.

Die EP 0 691 229 A1 offenbart eine Klimaanlage für ein Fahrzeug, welche sowohl im Kühlbetrieb als auch im Heizbetrieb arbeiten kann. Die Entscheidung, ob ein Heizbetrieb erfolgen soll, wird auf der Grundlage einer Innenraumtemperatur, einer vorgegebenen Temperatur sowie einer Außentemperatur getroffen.

Es ist die Aufgabe der vorliegenden Erfindung, ein Fahrzeugtemperiersystem und ein Verfahren zum Betreiben eines Fahrzeugtemperiersystems vorzusehen, mit welchen unter Ausnutzung der in einem Temperierflüssigkeitskreislauf für ein Antriebsaggregat transportierten Wärmeenergie ein Fahrzeuginnenraum in definierter Weise temperiert werden kann.

Gemäß einem ersten Aspekt wird diese Aufgabe gelöst durch ein Fahrzeugtemperiersystem gemäß Anspruch 1. Dieses umfasst ein brennstoffbetriebenes Heizgerät mit einer Brenneranordnung und einer Flüssigkeitswärmetauscheranordnung zur

Übertragung von in der Brenneranordnung bereitgestellter Wärme auf eine Temperierflüssigkeit, einen Temperierflüssigkeitskreislauf zwischen dem Heizgerät und einem Antriebsaggregat, umfassend einen von einem Austrittsbereich der Flüssigkeitswärmetauscheranordnung zu dem Antriebsaggregat führenden ersten Leitungsbereich und einen von dem Antriebsaggregat zu einem Eintrittsbereich der Flüssigkeitswärmetauscheranordnung führenden zweiten Leitungsbereich, eine erste Temperaturfühleranordnung zur Erfassung der Temperierflüssigkeitsisttemperatur im Temperierflüssigkeitskreislauf, eine Luftwärmetauscheranordnung in einem der Leitungsbereiche des Temperierflüssigkeitskreislaufs zur Übertragung von in der Temperierflüssigkeit transportierter Wärme auf in einen Fahrzeuginnenraum einzuleitende Luft, ein Gebläse zum Fördern von in der Luftwärmetauscheranordnung zu erwärmender Luft in den Fahrzeuginnenraum, eine zweite Temperaturfühleranordnung zur Erfassung der Fahrzeuginnenraumisttemperatur, eine Fahrzeuginnenraumsolltemperaturvorgabeanordnung zum Vorgeben einer Fahrzeuginnenraumsolltemperatur, sowie eine Ansteuervorrichtung zur Ansteuerung des Heizgerätes und des Gebläses derart, dass die Heizleistung der Brenneranordnung auf Grundlage einer Temperierflüssigkeitssolltemperatur und der Temperierflüssigkeitsisttemperatur eingestellt wird und die Förderleistung des Gebläses auf Grundlage der Fahrzeuginnenraumsolltemperatur und der Fahrzeuginnenraumisttemperatur eingestellt wird.

Das erfindungsgemäße Temperiersystem zeichnet sich dadurch aus, dass es neben der den Temperierflüssigkeitskreislauf betreffenden ersten Regelschleifer, durch welche die Temperatur der Temperierflüssigkeit bei einem vorgegebenen Wert gehalten werden kann, eine zweite Regelschleife aufweist, welche als Rückkopplungsgröße die Temperatur im Fahrzeuginnenraum berücksichtigt. Steigt diese Temperatur übermäßig stark an bzw. steigt diese Temperatur zu wenig stark an, kann durch entsprechende ansteuerungstechnische Einwirkung der Ansteuervorrichtung auf das Gebläse dieses zum Fördern einer größeren oder ggf. kleineren Luftmenge angesteuert werden. Je größer die in den Fahrzeuginnenraum geförderte Luftmenge ist, desto größer ist auch die in der Luftwärmetauscheranordnung aufgenommene und in den Fahrzeuginnenraum transportierte Wärmeenergiemenge. Auf diese Art und Weise wird es möglich, durch zwei ansteuerungstechnisch unabhängig voneinander betriebene Regelschleifen einerseits für definierte Temperaturverhältnisse im Wärmeenergiereservoir, also dem Temperierflüssigkeitskreislauf, zu sorgen, und andererseits für einen den Temperaturverhältnissen im Fahrzeuginnenraum geeignet angepassten Transport der Wärmeenergie von diesem Wärmereservoir in den Fahrzeuginnenraum zu sorgen.

Um berücksichtigen zu können, dass auch die Umgebungstemperatur einen starken Einfluss auf das Erwärmungsverhalten des Fahrzeuginnenraums haben kann, wird vorgeschlagen, dass eine dritte Temperaturfühleranordnung vorgesehen ist zur Erfassung der Umgebungstemperatur und dass die Temperierflüssigkeitssolltemperatur in Abhängigkeit von der Umgebungstemperatur eingestellt wird. Dabei kann vorgesehen sein, dass die Temperierflüssigkeitssolltemperatur mit abnehmender Umgebungstemperatur zunimmt, so dass, je kälter es in der Umgebung eines derartigen Fahrzeugs ist, desto mehr Wärmeenergie im Temperierflüssigkeitskreislauf bereitgestellt wird und mithin auch in Richtung Fahrzeuginnenraum transportiert werden kann.

Das erfindungsgemäße System kann weiterhin derart aufgebaut sein, dass in dem Temperiermittelkreislauf ein das Antriebsaggregat wenigstens teilweise überbrückender Verbindungsleitungsbereich zwischen dem ersten Leitungsbereich und dem zweiten Leitungsbereich und eine Schaltventilanordnung vorgesehen sind, durch welche die durch den Verbindungsleitungsbereich und das Antriebsaggregat strömenden Anteile der im Temperierflüssigkeitskreislauf strömenden Temperierflüssigkeit einstellbar sind. Durch eine derartige Schaltventilanordnung wird es möglich, das Antriebsaggregat beispielsweise dann, wenn dessen Erwärmung nicht gewünscht oder erforderlich ist, aus dem Temperierflüssigkeitskreislauf zumindest teilweise auszukoppeln, so dass die durch die Temperierflüssigkeit transportierte Wärmeenergie verstärkt in Richtung Fahrzeuginnenraum transportiert werden kann. Bei derartiger Ausgestaltung kann weiterhin vorgesehen sein, dass die Ansteuervorrichtung dazu ausgebildet ist, dann, wenn zumindest der größere Anteil der Temperierflüssigkeit durch das Antriebsaggregat strömt, das Gebläse nicht oder nur mit geringer Förderleistung zu betreiben. Auf diese Art und Weise wird dafür gesorgt, dass dann, wenn der größere Anteil der oder die gesamte Temperierflüssigkeit durch das Antriebsaggregat strömt und somit angenommen werden kann, dass auch die Erwärmung des Antriebsaggregats erforderlich ist, ggf. sogar Priorität hat, nur ein vergleichsweise geringer Anteil der Wärmeenergie in der Luftwärmetauscheranordnung abgenommen und in Richtung Fahrzeuginnenraum transportiert werden wird bzw. ein derartiger Transport durch Deaktivierung des Gebläses völlig unterbleibt. Somit wird eine vergleichsweise schnelle Erwärmung des Antriebsaggregats bzw. auch der im Temperierflüssigkeitskreislauf zirkulierenden Temperierflüssigkeit auf eine gewünschte Temperatur ermöglicht, woraufhin dann beispielsweise das Gebläse aktiviert bzw. mit größerer Förderleistung betrieben werden kann, um auch den Fahrzeuginnenraum geeignet zu erwärmen.

Um zwischen diesen Betriebszuständen differenzieren zu können, wird vorgeschlagen, dass in der Ansteuervorrichtung Information über den Schaltzustand der Schaltventilanordnung vorliegt. Dies kann beispielsweise dadurch erfolgen, dass die Schaltventilanordnung unter der Ansteuerung der Ansteuervorrichtung steht, die Ansteuervorrichtung diese also in die verschiedenen Schaltzustände bringt. Alternativ kann die Schaltventilanordnung dann, wenn sie beispielsweise als Bimetallthermostatventil ausgebildet ist, mit einer entsprechenden Sensoranordnung Information an die Ansteuervorrichtung liefern, so dass die Ansteuervorrichtung erkennen kann, in welchem Schaltzustand die Schaltventilanordnung sich befindet.

Weiter kann das erfindungsgemäße Fahrzeugtemperiersystem derart ausgebildet sein, dass eine Entfrostungsfunktionsaktivierungsanordnung vorgesehen ist und dass die Ansteueranordnung dazu ausgebildet ist, bei aktivierter Entfrostungsfunktion die Brenneranordnung mit einer Heizleistung zu betreiben, welche im Bereich der maximal möglichen Heizleistung liegt. Dies bedeutet, dass grundsätzlich auch ein Zustand akzeptiert werden kann, bei welchem die Temperatur der Temperierflüssigkeit im Temperierflüssigkeitskreislauf zumindest kurzzeitig über der für diese eigentlich vorgegebenen Temperierflüssigkeitssolltemperatur liegt, so dass möglichst schnell eine große Wärmeenergiemenge in den Fahrzeuginnenraum transportiert werden kann.

Die Förderleistung des Gebläses oder/und die Heizleistung der Brenneranordnung kann beispielsweise durch die Ansteuervorrichtung stufenartig variierbar sein. Dies bedeutet, dass für jeden dieser Systembereiche zwei oder mehrere Betriebsstufen vorgesehen sein können mit verschiedenen Förderleistungen bzw. Drehzahlen eines Gebläserades bzw. verschiedenen Einspeisungsraten von Brennstoff und Verbrennungsluft in die Brennanordnung. Alternativ ist es selbstverständlich möglich, die Förderleistung des Gebläses oder/und die Heizleistung der Brenneranordnung kontinuierlich zu variieren und mithin eine sehr feinfühlige Einregelung der betroffenen Temperaturverhältnisse zu ermöglichen.

Gemäß einem weiteren Aspekt der vorliegenden Erfindung wird die eingangs genannte Aufgabe gelöst durch ein Verfahren zum Betreiben eines Fahrzeugtemperiersystems gemäß Anspruch 10. Das zu betreibende Fahrzeugtemperiersystem umfasst ein brennstoffbetriebenes Heizgerät mit einer Brenneranordnung und einer Flüssigkeitswärmetauscheranordnung zur Übertragung von in der Brenneranordnung bereitgestellter Wärme auf eine Temperierflüssigkeit, einen Temperierflüssigkeitskreislauf zwischen dem Heizgerät und einem Antriebsaggregat, umfassend einen von einem Austrittsbereich der Flüssigkeitswärmetauscheranordnung zu dem Antriebsaggregat führenden ersten Leitungsbereich und einen von dem Antriebsaggregat zu einem Eintrittsbereich der Flüssigkeitswärmetauscheranordnung führenden zweiten Leitungsbereich, eine erste Temperaturfühleranordnung zur Erfassung der Temperierflüssigkeitsisttemperatur im Temperierflüssigkeitskreislauf, eine Luftwärmetauscheranordnung in einem der Leitungsbereiche des Temperierflüssigkeitskreislaufs zur Übertragung von in der Temperierflüssigkeit transportierter Wärme auf in einen Fahrzeuginnenraum einzuleitende Luft, ein Gebläse zum Fördern von in der Luftwärmetauscheranordnung zu erwärmender Luft in den Fahrzeuginnenraum, eine zweite Temperaturfühleranordnung zur Erfassung der Fahrzeuginnenraumisttemperatur, eine Fahrzeuginnenraumsolltemperaturvorgabeanordnung zum Vorgeben einer Fahrzeuginnenraumsolltemperatur, bei welchem Verfahren die Heizleistung der Brenneranordnung auf Grundlage einer Temperierflüssigkeitssolltemperatur und der Temperierflüssigkeitsisttemperatur eingestellt wird und die Förderleistung des Gebläses auf Grundlage der Fahrzeuginnenraumsolltemperatur und der Fahrzeuginnenraumisttemperatur eingestellt wird.

Es ist selbstverständlich, dass bei einem derartigen Verfahren die vorangehend thematisierten Aspekte einzeln oder in Kombination implementiert sein können.

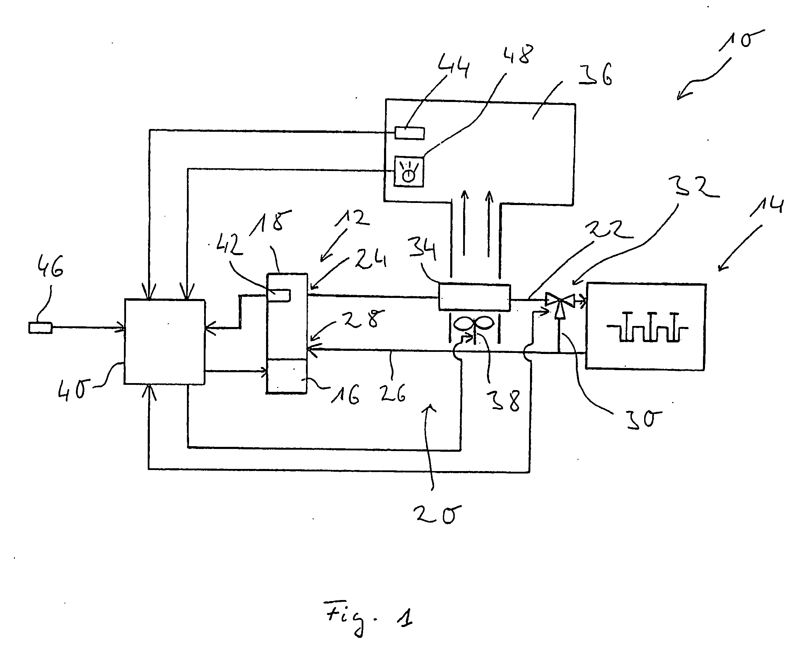

Die Erfindung wird nachfolgend mit Bezug auf die beiliegende Fig. 1 detailliert beschrieben, welche in prinzipartiger Darstellung ein Fahrzeugtemperiersystem veranschaulicht.

Das in der Fig. 1 schematisch dargestellte Fahrzeugtemperiersystem 10 umfasst als zentrale Systembestandteile ein brennstoffbetriebenes Heizgerät 12 und ein Antriebsaggregat 14, das im Allgemeinen als Brennkraftmaschine ausgebildet ist. Das Heizgerät 12, das sowohl als Standheizung als auch als Zuheizer ausgebildet sein kann bzw. betrieben werden kann, umfasst eine Brenneranordnung 16, beispielsweise nach Art eines Verdampferbrenners aufgebaut, sowie eine Flüssigkeitswärmetauscheranordnung 18. Die Flüssigkeitswärmetauscheranordnung 18 ist durchströmbar von einer in einem Temperierflüssigkeitskreislauf 20 zwischen dem Heizgerät 12 und dem Antriebsaggregat 14 zirkulierenden Temperierflüssigkeit, die beispielsweise das normale Kühlmittel des Antriebsaggregats 14 bzw. eine Brennkraftmaschine sein kann. Ein erster Leitungsbereich 22 des Temperierflülssigkeitskreislaufs 20 führt von einem Austrittsbereich 24 der Flüssigkeitswärmetauscheranrodnung 18 zum Antriebsaggregat 14. Ein zweiter Leitungsbereich 26 führt vom Antriebsaggregat 14 zu einem Eintrittsbereich 28 der Flüssigkeitswärmetauscheranordnung 18. Durch eine nicht dargestellte Förderpumpe, die beispielsweise auch im Bereich des Antriebsaggregats 14 oder an sonstiger Position im Temperierflüssigkeitskreislauf 20 angeordnet sein kann, wird die Zirkulation der Temperierflüssigkeit im Temperierflüssigkeitskreislauf 20 aufrecht erhalten bzw. in Gang gesetzt. Ein Verbindungsleitungsbereich 30 kann zwischen dem ersten Leitungsbereich 22 und dem zweiten Leiltungsbereich verlaufen, so dass bei entsprechender Schaltung eines Schaltventils 32 die im Temperierflüssigkeitskreislauf 20 zirkulierende Temperierflüssigkeit entweder vollständig durch das Antriebsaggregat 14 strömt, oder das Antriebsaggregat 14 vollständig umströmt, oder teilweise durch das Antriebsaggregat 14 und teilweise durch den Verbindungsleitungsbereich 30 strömt.

In dem von der Wärmetauscheranordnung 18 zum Antriebsaggregat 14 führenden ersten Leitungsbereich 22 ist eine Luftwärmetauscheranordnung 34 vorgesehen. Die in einen Fahrzeuginnenraum 36 einzuleitende Luft wird, gefördert durch ein Gebläse 38, über die Luftwärmetauscheranordnung 34 hinweg bzw. durch diese hindurch gefördert und kann dabei ggf. Wärme von der im ersten Leitungsbereich 22 strömenden Temperierflüssigkeit aufnehmen.

Eine allgemein mit 40 bezeichnete Ansteuervorrichtung steuert bzw. regelt den Betrieb der verschiedenen anzusteuernden Systembereiche des Fahrzeugtemperiersystems 10. Dazu gehören insbesondere die Brenneranordnung 16 des Heizgeräts 12 und das Gebläse 38. Im Falle der Brenneranordnung 16 kann durch Ansteuerung einer Dosierpumpe und eines Verbrennungsluftgebläses durch Erzeugung entsprechender Ansteuerbefehle die Heizleistung und somit die auf die zirkulierende Temperierflüssigkeit übertragene Wärmemenge eingestellt werden. Durch ansteuerungstechnische Einwirkung auf das Gebläse 38 kann die die Luftwärmetauscheranordnung 34 umströmende und mithin von dieser Wärme abziehende Luftmenge eingestellt werden.

Die Ansteueranordnung 40 erzeugt ihre Ansteuerbefehle für die verschiedenen Systembereiche des Temperiersystems 10 unter Berücksichtigung verschiedener Eingangsgrößen bzw. Vorgabewerte. Eine dieser Eingangsgrößen ist ein von einem Temperatursensor 42 geliefertes Signal, welches die Temperatur der im Temperierflüssigkeitskreislauf 20 zirkulierenden Temperierflüssigkeit wiedergibt. Beispielsweise kann der Temperatursensor 20 nahe dem Austrittsbereich 24 der Flüssigkeitswärmetauscheranordnung 18 angeordnet sein.

Ein weiterer Temperatursensor 44 ist im oder in Zuordnung zu dem Fahrzeuginnenraum 36 vorgesehen und liefert ein Signal zur Ansteuervorrichtung 40, welches die Temperatur im Fahrzeuginnenraum 36 wiedergibt. Ein optional auch vorgesehener Außentemperatursensor 46 liefert ein Signal, welches die Temperatur in der Umgebung, also beispielsweise außen an einem Fahrzeug, wiedergibt. Durch die drei Temperatursensoren 42, 44, 46 werden also für die Ansteuervorrichtung 40 der Ansteuerung zugrunde zu legende Größen bereitgestellt, die der Temperierflüssigkeitsisttemperatur, der Fahrzeuginnenraumisttemperatur bzw. der Aüßemtemperatur oder Umgebungstemperatur entsprechen.

Weiter ist eine Bedieneinheit 48 vorgesehen, beispielsweise im Fahrzeuginnenraum oder alternativ oder zusätzlich als Fernbedienungseinheit. Über diese Bedieneinheit 48 kann durch einen Fahrer die für den Fahrzeuginnenraum gewünschte Temperatur als Fahrzeuginnenraumsolltemperatur vorgegeben werden. Selbstverständlich können auch weitere Eingabegrößen, wie z. B. der Zeitpunkt einer geplanten Nutzungsaufnahme eines Fahrzeugs eingegeben werden, so dass beispielsweise auch unter Berücksichtigung der Außentemperatur die Ansteuervorrichtung 40 rechtzeitig vor der geplanten Nutzungsaufnahme das Heizgerät 12 aktivieren kann, um somit für eine Vorwärmung des Antriebsaggregats 14 und des Fahrzeuginnenraums 36 zu sorgen. Eine weitere noch erläuternde Funktionalität, die mit der Bedieneinheit 48 aktiviert werden kann, ist eine so genannte Entfrostungsfunktion. Mit dieser Entfrostungsfunktion kann für eine möglichst rasche Erwärmung des Fahrzeuginnenraums 36 gesorgt werden, beispielsweise wenn vor der Nutzungsaufnahme keine Vorwärmung oder eine zu kurze Vorwärmung erfolgt ist. Neben den vorangehend beschriebenen Größen, welche die Ansteuervorrichtung 40 der Erzeugung ihrer Ansteuerbefehle zugrunde legen kann, kann beispielsweise in dieser eine Temperierflüssigkeitssolltemperatur hinterlegt sein.

Im Folgenden wird der Betrieb des in Fig. 1 gezeigten Temperiersystems 10 erläutert.

Bei Inbetriebnahme dieses Temperiersystems 10 beispielsweise bei vergleichsweise niedrigen Umgebungstemperaturen und grundsätzlich kalten Systemkomponenten wird, beispielsweise in einer Vorwärmphase vor der Nutzungsaufnahme eines Fahrzeugs, zunächst das Heizgerät 12 in Betrieb gesetzt, um durch die darin ablaufende Verbrennung Wärme zu erzeugen und diese in der Flüssigkeitswärmetauscheranordnung 18 auf die im Temperierflüssigkeitskreislauf 20 zirkulierende Temperierflüssigkeit zu übertragen. Da in dieser Phase die Temperierflüssigkeitsisttemperatur im Allgemeinen deutlich unter der Temperierflüssigkeitssolltemperatur von beispielsweise 40°C liegen wird, kann die Brenneranordnung 16 zunächst zur Bereitstellung der maximal möglichen Heizleistung angesteuert werden. Infolgedessen wird die Temperierflüssigkeit sich allmählich erwärmen. Je nachdem, ob der Erwärmung des Antriebsaggregats 14 oder der Erwärmung des Fahrzeuginnenraums 36 Priorität gegeben wird, kann durch entsprechende Stellung des Schaltventils 32 dafür gesorgt werden, dass die Temperierflüssigkeit durch das Antriebsaggregat 14 hindurchströmt und dieses durch Wärmeabgabe miterwärmt, oder durch den Verbindungsleitungsbereich 30 strömt und somit im Antriebsaggregat 14 im Wesentlichen keine Wärmeverluste erleidet. Beispielsweise kann als Schaltventilanordnung ein Bimetallthermostatventil vorgesehen sein, welches temperaturabhängig schaltet und bei unter einer Schalttemperatur liegender Temperierflüssigkeitstemperatur den Strömungsweg durch das Antriebsaggregat 14 freigibt und den Verbindungsleitungsbereich 30 gegen Durchströmung blockiert, während bei über einer Schalttemperatur liegender Temperierflüssigkeitstemperatur der Strömungsweg durch das Antriebsaggregat 14 blockiert bzw. zumindest gedrosselt werden kann, so dass zumindest der größere Anteil der Temperierflüssigkeit durch den Verbindungsleitungsbereich 30 hindurchströmt. Bei derartiger Ausgestaltung kann dem Schaltventil 32 ein Sensor zugeordnet sein, der dessen Schaltstellung erfasst und ein entsprechendes Signal in die Ansteuervorrichtung 40 liefert. Befindet sich das System dann in einem Zustand, in welchem aufgrund vergleichsweise niedriger Temperatur des Antriebsaggregats 14 und auch der Temperierflüssigkeit der Strömungsweg durch das Antriebsaggregat 14 hindurch freigegeben ist, kann die Ansteuervorrichtung 40 das Gebläse 38 noch außer Betrieb halten oder nur mit vergleichsweise geringer Förderleistung in Betrieb setzen, so dass der Temperierflüssigkeit im Bereich der Luftwärmetauscheranordnung 34 im Wesentlichen keine Wärme entzogen werden kann. Bei ansteigender Temperatur kann dann auch das Schaltventil 32 in seine den Verbindungsleitungsbereich 30 freigebende Schaltstellung gelangen, was in der Ansteuervorrichtung 40 dazu führt, dass diese das Gebläse 38 ansteuert, um nunmehr eine größere Luftmenge durch die Luftwärmetauscheranordnung 34 hindurch zu fördern. Auf diese Art und Weise wird eine größere Wärmemenge in den Fahrzeuginnenraum 36 eingetragen und dieser erwärmt bzw. schneller erwärmt.

Nähert sich die Temperierflüssigkeitsisttemperatur der Temperierflüssigkeitssolltemperatur an, was durch entsprechenden Vergleich in der Ansteuervorrichtung 40 erkannt werden kann, so kann die Heizleistung der Brenneranordnung 16 gesenkt werden, so dass die Temperierflüssigkeitsisttemperatur sich im Bereich der Temperierflüssigkeitssolltemperatur einpegelt, also eine Einregelung auf diese Temperierflüssigkeitssolltemperatur stattfindet. Ist die Ansteuervorrichtung 40 dazu ausgebildet, die Brenneranordnung 16 in mehreren diskreten Heizleistungsstufen zu betreiben, kann dann eine Zweipunktregelung stattfinden, in welcher alternierend zwischen zwei Heizleistungsstufen umgeschaltet wird.

Es sei hier darauf hingewiesen, dass die Temperierflüssigkeitssolltemperatur im Bereich derjenigen Temperatur liegen kann, bei welcher das Schaltventil 32 in seinen das Antriebsaggregat 14 zumindest teilweise überbrückenden Schaltzustand geht. Grundsätzlich könnte aber auch vorgesehen sein, dass eine Temperaturstaffelung stattfindet, so dass bereits vor Erreichen der Temperierflüssigkeitssolltemperatur durch das zumindest teilweise Abkoppeln des Antriebsaggregat 14 aus dem Temperierflüssigkeitskreislauf 20 eine noch schnellere Erwärmung der Temperierflüssigkeit und auch des Fahrzeuginnenraums 36 erlangt werden kann.

Bei im Bereich der Temperierflüssigkeitssolltemperatur eingeregelter Temperierflüssigkeitsisttemperatur wird also durch Aktivieren bzw. Inbetriebhalten des Gebläses 38 Luft durch die Luftwärmetauscheranordnung 34 hindurch befördert, um dort Wärme von der Temperierflüssigkeit aufzunehmen und sie in den Fahrzeuginnenraum 36 zu transportieren. Der Temperatursensor 44 erfasst die Temperatur im Fahrzeuginnenraum 36 und liefert das entsprechende Signal an die Ansteuervorrichtung 40. So lange die Fahrzeuginnenraumisttemperatur deutlich unter der Fahrzeuginnenraumsolltemperatur liegt, kann beispielsweise das Gebläse 38 zum Arbeiten mit großer Förderkapazität bzw. höchster Drehzahl angesteuert werden. Nähert sich die Fahrzeuginnenraumisttemperatur der Fahrzeuginnenraumsolltemperatur an, so kann auch hier durch das Senken der Förderleistung bzw. Drehzahl des Gebläses 38 ein Einpegeln der Fahrzeuginnenraumisttemperatur im Bereich der Fahrzeuginnenraumsolltemperatur erzielt werden. Auch hier kann beispielsweise bei Ansteuerung des Gebläses 38 in mehreren diskreten Förderleistungsstufen nach Art einer Zweipunktregelung zwischen zwei Förderleistungsstufen bzw. Drehzahlen umgeschaltet werden, um dafür zu sorgen, dass die Fahrzeuginnenraumisttemperatur in dem Bereich der Fahrzeuginnenraumsolltemperatur eingeregelt wird.

Aus der vorangehenden Beschreibung erkennt man, dass bei dem erfindungsgemäß aufgebauten bzw. arbeitenden Fahrzeugtemperiersystem 10 zwei voneinander ansteuerungstechnisch unabhängig arbeitende Regelkreise vorhanden sind. Der erste Regelkreis umfasst den Temperierflüssigkeitskreislauf 20, in welchen die Temperierflüssigkeitsisttemperatur auf die Temperierflüssigkeitssolltemperatur eingeregelt wird, und zwar grundsätzlich unabhängig vom Ausgangssignal des Sensors 44, welcher die Fahrzeuginnenraumtemperatur erfasst. Ein zweiter Regelkreis umfasst die durch das Gebläse 38 in den Fahrzeuginnenraum 36 geförderte Luft bzw. die somit im Bereich des Fahrzeuginnenraums vorhandene Fahrzeuginnenraumisttemperatur, die durch den Sensor 44 erfasst wird und auf einen Wert eingeregelt wird, welcher möglichst nahe an der durch einen Fahrer vorgebbaren Fahrzeuginnenraumsolltemperatur liegt. In dieser Regelschleife wiederum wird das Ausgangssignal des Temperatursensors 42, welcher die Temperatur der Temperierflüssigkeit erfasst, nicht berücksichtigt. Somit kann jeder dieser beiden Regelkreise mit einem minimalen Verarbeitungsaufwand und unter Berücksichtigung minimaler Informationen für sich in optimaler Art und Weise arbeiten. Gleichwohl beeinflussen selbstverständlich diese Regelkreise einander. Wird beispielsweise durch Erreichen der Fahrzeuginnenraumsolltemperatur die Förderleistung des Gebläses 38 gesenkt bzw. dieses deaktiviert, wird selbstverständlich im Bereich der Luftwärmetauscheranordnung 34 der Temperierflüssigkeit weniger Wärme entzogen. Dies wiederum hat zur Folge, dass bei weiterer Aktivierung der Brenneranordnung 16 mit vergleichsweise hoher Brennerleistung die Temperierflüssigkeitsisttemperatur ansteigt und ein Vergleich mit der Temperierflüssigkeitssolltemperatur dann zu einer Senkung der Heizleistung der Brenneranordnung 16 führen wird.

Da bei einem derartigen Temperiersystem die Außentemperatur, hier erfasst durch den Außentemperatursensor 46, einen erheblichen Einfluss auf die Zeitdauer haben wird, bis zu welcher im Bereich des Fahrzeuginnenraums 36 oder auch im Bereich des Antriebsaggregats 14 die gewünschten Temperaturen vorliegen, kann gemäß einem weiteren Erfindungsaspekt die durch das Signal des Temperatursensors 46 wiedergegebene Außentemperatur genutzt werden, um beispielsweise die Temperierflüssigkeitssolltemperatur entsprechend anzupassen. Bei vergleichsweise niedriger Außentemperatur kann die Temperierflüssigkeitssolltemperatur angehoben werden, so dass durch entsprechende Aktivierung der Brenneranordnung 16 dafür gesorgt wird, dass die im Temperierflüssigkeitskreislauf 20 zirkulierende Temperierflüssigkeit eine höhere Temperatur annimmt, als dies bei höherer Außentemperatur und mithin geringerer vorgegebener Temperierflüssigkeitssolltemperatur der Fall ist. Eine höhere Temperierflüssigkeitsisttemperatur wiederum hat zur Folge, dass bei Aktivierung des Gebläses 38 auch mehr Wärme von der in den Fahrzeuginnenraum 36 geleiteten Luft aufgenommen werden kann und mithin der Fahrzeuginnenraum 36 besser erwärmt werden kann. Entsprechendes gilt selbstverständlich auch für die Erwärmung des Antriebsaggregats 14.

Wird durch einen Fahrer die Entfrostungsfunktion aktiviert, was beispielsweise durch entsprechende Betätigung der Bedieneinheit 48 erfolgen kann, so kann vorgesehen sein, dass die Ansteuervorrichtung 40 unabhängig davon, in welchem Bereich die Temperierflüssigkeitsisttemperatur liegt, die Brenneranordnung 16 zum Arbeiten mit oder nahe bei der maximal möglichen Heizleistung aktiviert. Dies bedeutet, dass hier zumindest für eine bestimmte Zeitdauer die im Temperierflüssigkeitskreislauf 20 zirkulierende Temperierflüssigkeit eine Temperatur aufweisen wird, die über der beispielsweise auch einer bestimmten Außentemperatur zugeordneten Temperierflüssigkeitssolltemperatur liegt. Auf diese Art und Weise kann innerhalb sehr kurzer Zeit eine sehr große Wärmemenge in den Fahrzeuginnenraum 36 eingetragen werden, wozu auch vorgesehen sein kann, dass bei aktivierter Entfrostungsfunktion auch das Gebläse 38 mit bzw. im Bereich der maximal möglichen Förderleistung betrieben wird. Für diese Entfrostungsfunktion kann beispielsweise auch eine maximal zugelassene Zeitdauer vorgegeben sein, deren Erreichen bzw. Ablaufen dann wieder den Übergang in den normalen Betrieb unter Berücksichtigung der Temperierflüssigkeitssolltemperatur zur Folge hat. Die Entfrostungsfunktion könnte beispielsweise auch automatisiert dann aktiviert werden, wenn bei Inbetriebnahme des Temperiersystems das Signal des Außentemperatursensors 46 eine unter einer bestimmten Grenztemperatur liegende Außentemperatur indiziert.

Wird das in der Fig. 1 dargestellte Temperiersystem betrieben bzw. in Betrieb gesetzt, wenn die verschiedenen Systembereiche und insbesondere das Antriebsaggregat 14 vergleichsweise warm sind, beispielsweise weil ein Fahrzeug zuvor betrieben worden ist und nur kurzzeitig außer Betrieb gesetzt war, so kann die im Antriebsaggregat 14 bzw. im Temperierflüssigkeitskreislauf 20 gespeicherte Wärmeenergie genutzt werden, um die Erwärmung des Fahrzeuginnenraums 36 fortzusetzen bzw. wieder aufzunehmen. Liegt dabei die Temperierflüssigkeitsisttemperatur im Bereich der Temperierflüssigkeitssolltemperatur, ist es dann nicht erforderlich, auch die Brenneranordnung 16 in Betrieb zu setzen. Erst dann, wenn die Abweichung der Temperierflüssigkeitsisttemperatur von der Temperierflüssigkeitssolltemperatur ein bestimmtes Ausmaß erreicht, kann die Brenneranordnung 16 in Betrieb gesetzt werden, um dafür zu sorgen, dass ausreichend Wärme zur Erwärmung des Fahrzeuginnenraums 36 bzw. erforderlichenfalls auch zum Warmhalten des Antriebsaggregats 14 bereitgestellt werden kann. Dies bedeutet, dass die Brenneranordnung 16 bzw. das Heizgerät 12 tatsächlich auch nur dann zur Bereitstellung von Wärmeenergie betrieben wird, wenn dies erforderlich ist, so dass ein unnötiger Verbrennungsbetrieb mit den dabei entstehenden Verbrennungsabgasen vermieden werden kann.

Weiterhin ist es bei dem erfindungsgemäßen Temperiersystem 10 möglich, das Schaltventil 32 so auszugestalten, dass es durch Erzeugung entsprechender Ansteuerbefehle vermittels der Ansteuervorrichtung 40 in seine verschiedenen Schaltzustände gebracht werden kann. Das heißt, auch hier liegt in der Ansteuervorrichtung 40 dann Information über den jeweiligen Schaltzustand vor, nämlich dadurch, dass die Ansteuervorrichtung selbst die entsprechenden Stellbefehle generiert. Dieses Umschalten kann temperaturabhängig erfolgen, beispielsweise in Abhängigkeit von der Temperierflüssigkeitsisttemperatur. Liegt diese über einem vorbestimmten Grenzwert, kann auf eine Erwärmung des Antriebsaggregats 14 verzichtet werden. Wie vorangehend bereits ausgeführt, können hier jedoch verschiedene Prioritäten gesetzt werden. Beispielsweise könnte auch so vorgegangen werden, dass höhere Priorität bei der Erwärmung des Fahrzeuginnenraums 36 liegt, so dass dann, wenn beispielsweise Fahrzeuginnenraumisttemperatur einen bestimmten Wert erreicht hat, der nicht notwendigerweise der Fahrzeuginnenraumsolltemperatur entsprechen muss, das Schaltventil 32 in eine Stellung gebracht wird, in welcher dann auch das Antriebsaggregat 14 von der Temperierflüssigkeit durchströmt werden und somit auch erwärmt werden kann.

Wie vorangehend bereits dargelegt, können insbesondere die Brenneranordnung 16 und das Gebläse 38 so ausgebildet bzw. angesteuert werden, dass im Betrieb verschiedene Heizleistungs- bzw. Luftförderstufen eingestellt werden. Grundsätzlich ist es auch denkbar, bei zumindest einem dieser Systembereiche mit einer kontinuierlichen Variation zu arbeiten, also beispielweise im Regelkreis des Temperierflüssigkeitskreislaufs 20 durch kontinuierliche Variation der Heizleistung der Brenneranordnung 16 eine sehr feinfühlige Einregelung der Temperierflüssigkeit zu erlangen. Dabei kann beispielsweise so vorgegangen werden, dass in Abhängigkeit von der Abweichung zwischen der Temperierflüssigkeitsisttemperatur und der Temperierflüssigkeitssolltemperatur aus jeweils vorgegebenen Kennlinien für ein Verbrennungsluftgebläse und eine Dosierpumpe jeweilige Fördermengen bestimmt werden, mit welchen dann eine in Zuordnung zu einer jeweiligen Abweichung vorzusehende Heizleistung vorgegeben bzw. in kontinuierlicher Weise eingestellt bzw. angepasst werden kann. Auch das Gebläse kann beispielsweise durch pulsweitenmodifizierte Erregung mit einer mittleren Spannung beaufschlagt werden, die dann eine entsprechende Drehzahl und Förderleistung mit sich bringt.

## Patentansprüche

1. Fahrzeugtemperiersystem umfassend:
- ein brennstoffbetriebenes Heizgerät (12) mit einer Brenneranordnung (16) und einer Flüssigkeitswärmetauscheranordnung (18) zur Übertragung von in der Brenneranordnung (16) bereitgestellter Wärme auf eine Temperierflüssigkeit,
- einen Temperierflüssigkeitskreislauf (20) zwischen dem Heizgerät (12) und einem Antriebsaggregat (14), umfassend einen von einem Austrittsbereich (24) der Flüssigkeitswärmetauscheranordnung (18) zu dem Antriebsaggregat (14) führenden ersten Leitungsbereich (22) und einen von dem Antriebsaggregat (14) zu einem Eintrittsbereich (28) der Flüssigkeitswärnetauscheranordnung (18) führenden zweiten Leitungsbereich (26),
- eine erste Temperaturfühleranordnung (42) zur Erfassung der Temperierflüssigkeitsisttemperatur im Temperierflüssigkeitskreislauf (20),
- eine Luftwärmetauscheranordnung (34) in einem der Leitungsbereiche (22, 26) des Temperierflüssigkeitskreislaufs (20) zur Übertragung von in der Temperierflüssigkeit transportierter Wärme auf in einen Fahrzeuginnenraum (36) einzuleitende Luft,
- ein Gebläse (38) zum Fördern von in der Luftwärmetauscheranordnung (34) zu erwärmender Luft in den Fahrzeuginnenraum (36), **gekennzeichnet durch**
- eine zweite Temperaturfühleranordnung (44) zur Erfassung der Fahrzeuginnenraumisttemperatur,
- eine Fahrzeuginnenraumsolltemperaturvorgabeanordnung (48) zum Vorgeben einer Fahrzeuginnenraumsolltemperatur,
- eine Ansteuervorrichtung (40) zur Ansteuerung des Heizgerätes (12) und des Gebläses (38) derart, dass die Heizleistung der Brenneranordnung (16) in einem ersten Regelkreis auf Grundlage einer Abweichung zwischen einer Temperierflüssigkeitssolltemperatur und der Temperierflüssigkeitsisttemperatur eingestellt wird und die Förderleistung des Gebläses (38) in einem zweiten Regelkreis auf Grundlage einer Abweichung zwischen der Fahrzeuginnenraumsolltemperatur und der Fahrzeuginnenraumisttemperatur eingestellt wird,
wobei im ersten Regelkreis die von der zweiten Temperaturfühleranordnung (44) erfasste Fahrzeuginnenraumisttemperatur nicht berücksichtigt wird und im zweiten Regelkreis die von der ersten Temperaturfühleranordnung (42) erfasste Temperierflüssigkeitsisttemperatur nicht berücksichtigt wird.

2. Fahrzeugtemperiersystem nach Anspruch 1,
**dadurch gekennzeichnet, dass** eine dritte Temperaturfühleranordnung (46) vorgesehen ist zur Erfassung der Umgebungstemperatur und dass die Temperierflüssigkeitssolltemperatur in Abhängigkeit von der Umgebungstemperatur eingestellt wird.

3. Fahrzeugtemperiersystem nach Anspruch 2,
**dadurch gekennzeichnet, dass** die Temperierflüssigkeitssolltemperatur mit abnehmender Umgebungstemperatur zunimmt.

4. Fahrzeugtemperiersystem nach einem der Ansprüche 1 bis 3,
**dadurch gekennzeichnet, dass** in dem Temperiermittelkreislauf (20) ein das Antriebsaggregat (14) wenigstens teilweise überbrückender Verbindungsleitungsbereich (30) zwischen dem ersten Leitungsbereich (22) und dem zweiten Leitungsbereich (26) und eine Schaltventilanordnung (32) vorgesehen sind, durch welche die durch den Verbindungsleitungsbereich (30) und das Antriebsaggregat (14) strömenden Anteile der im Temperierflüssigkeitskreislauf (20) strömenden Temperierflüssigkeit einstellbar ist.

5. Fahrzeugtemperiersystem nach Anspruch 4,
**dadurch gekennzeichnet, dass** die Ansteuervorrichtung (40) dazu ausgebildet ist, dann, wenn zumindest der größere Anteil der Temperierflüssigkeit durch das Antriebsaggregat (14) strömt, das Gebläse (38) nicht oder nur mit geringer Förderleistung zu betreiben.

6. Fahrzeugtemperiersystem nach Anspruch 4 oder 5,
**dadurch gekennzeichnet, dass** in der Ansteuervorrichtung (40) Information über den Schaltzustand der Schaltventilanordnung (32) vorliegt.

7. Fahrzeugtemperiersystem nach einem der Ansprüche 1 bis 6,
**dadurch gekennzeichnet, dass** eine Entfrostungsfunktionsaktivierungsanordnung (48) vorgesehen ist und dass die Ansteueranordnung (40) dazu ausgebildet ist, bei aktivierter Entfrostungsfunktion die Brenneranordnung (16) mit einer Heizleistung zu betreiben, welche im Bereich der maximal möglichen Heizleistung liegt.

8. Fahrzeugtemperiersystem nach einem der Ansprüche 1 bis 6,
**dadurch gekennzeichnet, dass** die Ansteurvorrichtung (40) dazu ausgebildet ist, die Förderleistung des Gebläses (38) oder/und die Heizleistung der Brenneranordnung (16) stufenartig zu variieren.

9. Fahrzeugtemperiersystem nach einem der Ansprüche 1 bis 7,
**dadurch gekennzeichnet, dass** die Ansteuervorrichtung (40) dazu ausgebildet ist, die Förderleistung des Gebläses (38) oder/und die Heizleistung der Brenneranordnung (16) kontinuierlich zu variieren.

10. Verfahren zum Betreiben eines Fahrzeugtemperiersystems, dieses umfassend:
- ein brennstoffbetriebenes Heizgerät (12) mit einer Brenneranordnung (18) und einer Flüssigkeitswärmetauscheranordnung zur Übertragung von in der Brenneranordnung (16) bereitgestellter Wärme auf eine Temperierflüssigkeit,
- einen Temperierflüssigkeitskreislauf (20) zwischen dem Heizgerät (12) und einem Antriebsaggregat (14), umfassend einen von einem Austrittsbereich (24) der Flüssigkeitswärmetauscheranordnung (18) zu dem Antriebsaggregat (14) führenden ersten Leitungsbereich (22) und einen von dem Antriebsaggregat (14) zu einem Eintrittsbereich (28) der Flüssigkeitswärtnetauscheranordnung (18) führenden zweiten Leitungsbereich (26),
- eine erste Temperaturfühleranordnung (42) zur Erfassung der Temperierflüssigkeitsisttemperatur im Temperierflüssigkeitskreislauf (20),
- eine Luftwärmetauscheranordnung (34) in einem der Leitungsbereiche (22, 26) des Temperierflüssigkeitskreislaufs (20) zur Übertragung von in der Temperierflüssigkeit transportierter Wärme auf in einen Fahrzeuginnenraum (36) einzuleitende Luft,
- ein Gebläse (38) zum Fördern von in der Luftwärmetauscheranordnung (34) zu erwärmender Luft in den Fahrzeuginnenraum (36), **gekennzeichnet durch**:
- eine zweite Temperaturfühferanordnung (44) zur Erfassung der Fahrzeuginnenraumisttemperatur,
- eine Fahzeuginnenraumsolltemperaturvorgabeanordnung (48) zum Vorgeben einer Fahrzeuginnenraumsolltemperatur,
bei welchem Verfahren die Heizleistung der Brenneranordnung (16) in einemersten Regelkreis auf Grundlage einer Abweichung zwischen einer Temperierflüssigkeitssolltemperatur und der Temperierflüssigkeitsisttemperatur eingestellt wird und die Förderleistung des Gebläses (38) in einem zweiten Regelkreis auf Grundlage einer Abweichung zwischen der Fahrzeuginnenraumsolltemperatur und der Fahrzeuginnenraumisttemperatur eingestellt wird,
wobei im ersten Regelkreis die von der zweiten Temperaturfühleranordnung (44) erfasste Fahrzeuginnenraumisttemperatur nicht berücksichtigt wird und im zweiten Regelkreis die von der ersten Temperaturfühleranordnung (42) erfasste Temperierflüssigkeitsisttemperatur nicht berücksichtigt wird.

## Claims

1. Temperature control system for a vehicle, comprising
- a fuel operated heating device (12) with a burner arrangement (16) and a fluid heat exchanger arrangement (18) for transferring heat provided in the burner arrangement (16) to a temperature transfer fluid,
- a temperature transfer fluid circuit (20) between the heating device (12) and a drive unit (14), comprising a first conduit section (22), extending from an outlet zone (24) of the fluid heat exchanger arrangement (18) to the drive unit (14), and a second conduit section (26), extending from the drive unit (14) to an inlet zone (28) of the fluid heat exchanger arrangement (18),
- a first temperature sensor arrangement (42) for detecting the actual temperature of the temperature transfer fluid in the temperature transfer fluid circuit (20),
- an air heat exchanger arrangement (34) in one of the conduit sections (22, 26) of the temperature transfer fluid circuit (20) for transferring heat transported in the temperature transfer fluid to air to be inserted into a vehicle interior (36),
- a blower (38) for conveying air to be heated inside the air heat exchanger arrangement (34) to the vehicle interior (36), **characterized by**
- a second temperature sensor arrangement (44) for detecting the actual temperature of the vehicle interior,
- an arrangement for predefining a desired temperature of the vehicle interior (48) for predefining a desired temperature of the vehicle interior ,
- a drive device (40) for driving the heating device (12) and the blower (38) so that the heating power of the burner arrangement (16) is set in a first control circuit on the basis of a deviation of a desired temperature of the temperature transfer fluid from the actual temperature of the temperature transfer fluid and that the conveying capacity of the blower (38) is set in a second control circuit on the basis of the deviation of the desired temperature of the vehicle interior from the actual temperature of the vehicle interior,
the actual temperature of the vehicle interior detected by the second temperature sensor arrangement (44) not being accounted for in the first control circuit and the actual temperature of the temperature transfer fluid detected by the first temperature sensor arrangement (42) not being accounted for in the second control circuit.

2. Temperature control system for a vehicle according to claim 1, **characterized by** a third temperature sensor arrangement (46) being provided for detecting the ambient temperature and by the actual temperature of the temperature transfer fluid being set depending on the ambient temperature.

3. Temperature control system for a vehicle according to claim 2, **characterized by** the desired temperature of the temperature transfer fluid increasing with a decreasing ambient temperature.

4. Temperature control system for a vehicle according to one of claims 1 to 3, **characterized by** a connecting conduit section (30) which at least partly bridges the drive unit (14) being provided in the temperature transfer fluid circuit (20) between the first conduit section (22) and the second conduit section (26), and a switching valve arrangement (32) being provided, whereby the portions of the temperature control fluid flowing through the temperature transfer fluid circuit (20) which then flow through the connecting conduit section (30) and the drive unit (14) are adaptable.

5. Temperature control system for a vehicle according to claim 4, **characterized by** the drive unit (40) being adapted for not driving the blower (38) or only driving it with a low conveying capacity when at least the bigger portion of the temperature control fluid flows through the drive unit (14).

6. Temperature control system for a vehicle according to claim 4 or 5, **characterized by** information about the switching status of the switching valve (32) being available to the drive unit (40).

7. Temperature control system for a vehicle according to one of claims 1 to 6, **characterized by** a defrost function actuation arrangement (48) being provided and by the drive unit (40) being adapted for driving the burner arrangement (16) with a heating power which is in the range of the maximum heating power when the defrost function is activated.

8. Temperature control system for a vehicle according to one of claims 1 to 6, **characterized by** the drive unit (40) being adapted for stepwise varying the conveying capacity of the blower (38) or/and the heating power of the burner arrangement (16).

9. Temperature control system for a vehicle according to one of claims 1 to 7, **characterized by** the drive unit (40) being adapted for continuously varying the conveying capacity of the blower (38) or/and the heating power of the burner arrangement (16).

10. Method for operating a temperature control system for a vehicle, comprising:
- a fuel operated heating device (12) with a burner arrangement (16) and a fluid heat exchanger arrangement (18) for transferring heat provided in the burner arrangement (16) to a temperature transfer fluid,
- a temperature transfer fluid circuit (20) between the heating device (12) and a drive unit (14), comprising a first conduit section (22) extending from an outlet zone (24) of the fluid heat exchanger arrangement (18) to the drive unit (14) and a second conduit section (26) extending from the drive unit (14) to an inlet zone (28) of the fluid heat exchanger arrangement (18),
- a first temperature sensor arrangement (42) for detecting the actual temperature of the temperature transfer fluid in the temperature transfer fluid circuit (20),
- an air heat exchanger arrangement (34) in one of the conduit sections (22, 26) of the temperature transfer fluid circuit (20) for transferring heat transported in the temperature transfer fluid to air to be inserted into a vehicle interior (36),
- a blower (38) for conveying air to be heated inside the air heat exchanger arrangement (34) to the vehicle interior (36), **characterized by**
- a second temperature sensor arrangement (44) for detecting the actual temperature of the vehicle interior,
- an arrangement for predefining a desired temperature of the vehicle interior (48) for predefining a desired temperature of the vehicle interior ,
wherein with said method the heating power of the burner arrangement (16) is set in a first control circuit on the basis of a deviation of a desired temperature of the temperature transfer fluid from the actual temperature of the temperature transfer fluid and the conveying capacity of the blower (38) is set in a second control circuit on the basis of the deviation of the desired temperature of the vehicle interior from the actual temperature of the vehicle interior,
the actual temperature of the vehicle interior detected by the second temperature sensor arrangement (44) not being accounted for in the first control circuit and the actual temperature of the temperature transfer fluid detected by the first temperature sensor arrangement (42) not being accounted for in the second control circuit.

## Revendications

1. Système de contrôle de la température pour un véhicule, comprenant :
- un dispositif de chauffage (12) marchant au fuel avec un arrangement de brûleur (16) et un arrangement d'échangeur de chaleur au fluide (18) pour transférer de la chaleur fournie dans l'arrangement de brûleur (16) à un fluide pour contrôler la température,
- un circuit de fluide pour contrôler la température (20) entre le dispositif de chauffage (12) et une unité d'entraînement (14), comprenant une première section de conduit (22) menant d'une zone de sortie (24) de l'arrangement d'échangeur de chaleur au fluide (18) à l'unité d'entraînement (14), et une deuxième section de conduit (26) menant de l'unité d'entraînement (14) à une zone d'entrée (28) de l'arrangement d'échangeur de chaleur au fluide (18),
- un premier arrangement de capteur de température (42) pour saisir la température du fluide pour contrôler la température dans le circuit de fluide pour contrôler la température (20),
- un arrangement d'échangeur de chaleur à air (34) dans une des sections de conduit (22, 26) du circuit de fluide pour contrôler la température (20) pour transférer la chaleur transportée dans le fluide pour contrôler la température à l'air à insérer dans l'intérieur d'un véhicule (36),
- une soufflerie (38) pour faire avancer l'air à chauffer dans l'arrangement d'échangeur de chaleur à air (34) vers l'intérieur du véhicule (36), **caractérisé par**
- un deuxième arrangement de capteur de température (44) pour saisir la température réelle dans l'intérieur du véhicule,
- un arrangement pour prédéterminer la température désirée dans l'intérieur du véhicule (48) pour prédéterminer la température désirée dans l'intérieur du véhicule,
- un dispositif de commande (40) pour commander le dispositif de chauffage (12) et la soufflerie (38) tel que la puissance calorifique de l'arrangement de brûleur (16) est adaptée dans un premier circuit de commande sur la base d'une déviation de la température désirée du fluide pour contrôler la température par rapport à la température réelle du fluide pour contrôler la température et tel que la capacité de la soufflerie (38) est adaptée dans une deuxième circuit de commande sur la base d'une déviation de la température désirée dans l'intérieur d'un véhicule par rapport à la température réelle dans l'intérieur d'un véhicule,
la température réelle dans l'intérieur d'un véhicule saisie par le deuxième arrangement de capteur de température (44) n'étant pas prise en compte dans le premier circuit de commande et la température réelle du fluide pour contrôler la température saisie par le premier arrangement de capteur de température (42) n'étant pas prise en compte dans le deuxième circuit de commande.

2. Système de contrôle de la température pour un véhicule selon la revendication 1,
**caractérisé par** un troisième arrangement de capteurs de température (46) étant prévu pour saisir la température ambiante, la température désirée du fluide pour contrôler la température étant adaptée en fonction de la température ambiante.

3. Système de contrôle de la température pour un véhicule selon la revendication 2,
**caractérisé en ce que** la température désirée du fluide pour contrôler la, température augmente quand la température ambiante diminue.

4. Système de contrôle de la température pour un véhicule selon une des revendications 1 à 3,
**caractérisé par** une section de conduit de connexion (30) faisant au moins partiellement le pont de l'unité d'entraînement (14) et un arrangement de soupape de commutation (32) étant prévus dans le circuit de fluide pour contrôler la température (20) entre la première section de conduit (22) et la deuxième section de conduit (26), les portions du fluide pour contrôler la température circulant dans le circuit de fluide pour contrôler la température (20) qui passent par la section de conduit de connexion (30) et l'unité d'entraînement (14) étant ainsi réglables.

5. Système de contrôle de la température pour un véhicule selon la revendication 4,
**caractérisé par** le dispositif de commande (40) étant adapté pour ne pas faire marcher la soufflerie (38) ou pour la faire marcher avec une production minimale quand au moins la plus grande partie du fluide pour contrôler la température passe par l'unité d'entraînement (14).

6. Système de contrôle de la température pour un véhicule selon la revendication 4 ou 5,
**caractérisé par** des informations concernant l'état de commutation de l'arrangement de soupape de commutation (32) étant prévues au dispositif de commande (40).

7. Système de contrôle de la température pour un véhicule selon la revendication 1 à 6,
**caractérisé par** un arrangement d'activation d'une fonction de dégivrage (48) étant prévu et par le dispositif de commande (40) étant adapté pour faire marcher l'arrangement de brûleur (16) avec une puissance calorifique dans l'étendue de la puissance maximale lorsque la fonction de dégivrage est activée.

8. Système de contrôle de la température pour un véhicule selon la revendication 1 à 6,
**caractérisé par** le dispositif de commande (40) étant adapté pour varier la capacité de la soufflerie (38) ou/et la puissance calorifique de l'arrangement de brûleur (16) par étapes.

9. Système de contrôle de la température pour un véhicule selon la revendication 1 à 7,
**caractérisé par** le dispositif de commande (40) étant adapté pour varier la capacité de la soufflerie (38) ou/et la puissance calorifique de l'arrangement de brûleur (16) d'une manière continue.

10. Méthode pour faire marcher un système de contrôle de la température pour un véhicule, comprenant :
- un dispositif de chauffage (12) marchant au fuel avec un arrangement de brûleur (16) et un arrangement d'échangeur de chaleur au fluide (18) pour transférer de la chaleur fournie dans l'arrangement de brûleur (16) à une fluide pour contrôler la température,
- un circuit de fluide pour contrôler la température (20) entre le dispositif de chauffage (12) et une unité d'entraînement (14), comprenant une première section de conduit (22) menant d'une zone de sortie (24) de l'arrangement d'échangeur de chaleur au fluide (18) à l'unité d'entraînement (14), et une deuxième section de conduit (26) menant de l'unité d'entraînement (14) à une zone d'entrée (28) de l'arrangement d'échangeur de chaleur au fluide (18),
- un premier arrangement de capteur de température (42) pour saisir la température réelle du fluide pour contrôler la température dans le circuit de fluide pour contrôler la température (20),
- un arrangement d'échangeur de chaleur à l'air (34) dans une des sections de conduit (22, 26) du circuit de fluide pour contrôler la température (20) pour transférer la chaleur transportée dans le fluide pour contrôler la température à l'air à insérer dans l'intérieur d'un véhicule (36),
- une soufflerie (38) pour faire avancer l'air à chauffer dans l'arrangement d'échangeur de chaleur air (34) vers l'intérieur du véhicule (36), **caractérisé par**
- un deuxième arrangement de capteur de température (44) pour saisir la température réelle dans l'intérieur du véhicule,
- un arrangement pour prédéterminer la température désirée dans l'intérieur du véhicule (48) pour prédéterminer la température désirée dans l'intérieur du véhicule,
la méthode étant telle que la puissance de chauffage de l'arrangement de brûleur (16) est adaptée dans un premier circuit de commande sur la base d'une déviation de la température désirée du fluide pour contrôler la température par rapport à la température réelle du fluide pour contrôler la température et telle que la capacité de la soufflerie (38) est adaptée dans une deuxième circuit de commande sur la base d'une déviation de la température désirée dans l'intérieur d'un véhicule par rapport à la température réelle dans l'intérieur d'un véhicule,
la température réelle dans l'intérieur d'un véhicule saisie par le deuxième arrangement de capteur de température (44) n'étant pas prise en compte dans le premier circuit de commande et la température réelle du fluide pour contrôler la température saisie par le premier arrangement de capteur de température (42) n'étant pas prise en compte dans le deuxième circuit de commande.
